(19) Europäisches Patentamt
European Patent Office
Office européen des brevets

(11) EP 2 429 686 B1

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(21) Anmeldenummer: **10721454.6**

(22) Anmeldetag: **12.05.2010**

(51) Int Cl.:
***B01D 53/14*** *(2006.01)*

(86) Internationale Anmeldenummer:
**PCT/EP2010/056556**

(87) Internationale Veröffentlichungsnummer:
**WO 2010/130787 (18.11.2010 Gazette 2010/46)**

(54) **ABSORPTIONSMITTEL ZUM SELEKTIVEN ENTFERNEN VON SCHWEFELWASSERSTOFF AUS FLUIDSTRÖMEN**

ABSORBENT FOR SELECTIVE REMOVAL OF HYDROGEN SULFIDE FROM FLUIDS

MILIEU D'ABSORPTION POUR EXTRAIRE SÉLECTIVEMENT DU SULFURE D'HYDROGÈNE À PARTIR DE COURANTS DE FLUIDES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **12.05.2009 EP 09160039**

(43) Veröffentlichungstag der Anmeldung:
**21.03.2012 Patentblatt 2012/12**

(73) Patentinhaber: **BASF SE**
**67056 Ludwigshafen (DE)**

(72) Erfinder:
- **VORBERG, Gerald**
  **67346 Speyer (DE)**
- **KATZ, Torsten**
  **67434 Neustadt (DE)**
- **SIEDER, Georg**
  **67098 Bad Dürkheim (DE)**
- **RIEMANN, Christian**
  **67122 Altrip (DE)**
- **DENGLER, Erika**
  **67459 Böhl-Iggelheim (DE)**

(56) Entgegenhaltungen:
**WO-A1-2007/021531** **US-A- 4 892 674**
**US-A1- 2008 056 971**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 429 686 B1

## Beschreibung

Die vorliegende Erfindung betrifft ein Absorptionsmittel zum Entfernen von sauren Gasen aus Fluidströmen, insbesondere zum selektiven Entfernen von Schwefelwasserstoff aus Fluidströmen, und ein Verfahren zum Entfernen saurer Gase aus einem Fluidstrom.

Die Entfernung von Sauergasen, wie z.B. $CO_2$, $H_2S$, $SO_2$, $CS_2$, HCN, COS oder Mercaptanen, aus Fluidströmen, wie Erdgas, Raffineriegas, Synthesegas, ist aus unterschiedlichen Gründen von Bedeutung. Der Gehalt an Schwefelverbindungen von Erdgas muss durch geeignete Aufbereitungsmaßnahmen unmittelbar an der Erdgasquelle reduziert werden, denn die Schwefelverbindungen bilden in dem vom Erdgas häufig mitgeführten Wasser Säuren, die korrosiv wirken. Für den Transport des Erdgases in einer Pipeline oder die Weiterverarbeitung in einer Erdgasverflüssigungsanlage (LNG = Liquified natural Gas) müssen daher vorgegebene Grenzwerte der schwefelhaltigen Verunreinigungen eingehalten werden. Die Verringerung des Gehalts an Kohlendioxid ist vielfach zur Einstellung eines vorgegebenen Brennwerts erforderlich.

Zur Entfernung von Sauergasen werden Wäschen mit wässrigen Lösungen anorganischer oder organischer Basen eingesetzt. Beim Lösen von Sauergasen in dem Absorptionsmittel bilden sich mit den Basen Ionen. Das Absorptionsmittel kann durch Entspannen auf einen niedrigeren Druck und/oder Strippen regeneriert werden, wobei die ionischen Spezies zu Sauergasen zurück reagieren und/oder mittels Dampf abgestrippt werden. Nach dem Regenerationsprozess kann das Absorptionsmittel wiederverwendet werden.

Ein Verfahren, bei dem alle sauren Gase, insbesondere $CO_2$ und $H_2S$, weitestgehend entfernt werden, wird auch als "Total-Absorption" bezeichnet. In bestimmten Fällen kann es dagegen wünschenswert sein, bevorzugt $H_2S$ vor $CO_2$ zu absorbieren, um ein Brennwert-optimiertes $CO_2/H_2S$-Verhältnis für eine nachgeschaltete Claus-Anlage zu erhalten. In diesem Fall spricht man von einer "selektiven Wäsche". Ein ungünstiges $CO_2/H_2S$-Verhältnis kann die Leistung und Effizienz der Claus-Anlage durch Bildung von $COS/CS_2$ und Verkokung des Claus-Katalysators oder durch einen zu geringen Heizwert beeinträchtigen.

Tertiäre Amine, wie Methyldiethanolamin (MDEA), oder sterisch gehinderte Amine zeigen kinetische Selektivität für $H_2S$ gegenüber $CO_2$. Diese Amine reagieren nicht direkt mit $CO_2$; vielmehr wird $CO_2$ in einer langsamen Reaktion mit dem Amin und mit Wasser zu Bicarbonat umgesetzt. Tertiäre Amine eignen sich daher insbesondere für eine selektive Entfernung von $H_2S$ aus Gasgemischen, die $CO_2$ und $H_2S$ enthalten.

Die Absorptionsrate von $CO_2$ in wässrigen Lösungen von tertiären Alkanolaminen kann durch Zugabe weiterer Verbindungen, die als Aktivatoren oder Promotoren bezeichnet werden, erhöht werden. Eine der wirksamsten Absorptionsflüssigkeiten zur Entfernung von $CO_2$ und $H_2S$ aus einem Gasstrom ist eine wässrige Lösung von Methyldiethanolamin (MDEA) und Piperazin als Promotor. Ein derartiges Absorptionsmittel ist bekannt aus der US 4,336,233.

Primäre Amine, wie Monoethanolamin (MEA), und sekundäre Amine, wie Diethanolamin (DEA) oder Diisopropanolamin (DIPA), können in einer schnelleren Reaktion direkt mit $CO_2$ reagieren. Diese Amine zeigen eine deutlich geringere $H_2S$-Selektivität. Aufgrund ihrer hohen Affinität für saure Gase können sie auch zur Wäsche von Gasströmen mit niedrigem Sauergas-Partialdruck verwendet werden. Mit der hohen Affinität für saure Gase korreliert allerdings eine hohe spezifische Regenerationsenergie.

Die EP-A 134 948 beschreibt ein Absorptionsmittel, das ein alkalisches Material und eine Säure mit einem $pK_a$ von 6 oder weniger umfasst. Bevorzugte Säuren sind Phosphorsäure, Ameisensäure oder Salzsäure. Der Säurezusatz soll insbesondere das Strippen $H_2S$ enthaltender saurer Gase effizienter machen.

Die WO 2007/021531 offenbart Absorptionsmittel zur selektiven Entfernung unter Normalbedingungen gasförmiger saurer Komponenten aus Gemischen, die die gasförmigen sauren Komponenten und gasförmige nicht-saure Komponenten und $CO_2$ enthalten. Die Absorptionsmittel umfassen ein über eine Alkylengruppe von wenigstens 2 Kettenatomen an den Aminstickstoff eines gehinderten sekundären oder tertiären Amins gebundenes Metallsulfonat, Metallsulfat, Metallsulfamat, Metallphosphonat, Metallphosphat, Metallphosphoramidit oder Metallcarboxylat.

Der Erfindung liegt die Aufgabe zugrunde, ein Verfahren und ein Absorptionsmittel zur Entfernung saurer Gase aus Fluidströmen anzugeben, das gegenüber Absorptionsmitteln auf der Basis von Aminen bzw. Amin/Promotor-Kombinationen einen verringerten Regenerationsenergiebedarf zeigt, ohne die Absorptionskapazität der Lösung für saure Gase wesentlich zu verringern.

Die Aufgabe wird gelöst durch ein Absorptionsmittel zum Entfernen saurer Gase aus einem Fluidstrom, das eine wässrige Lösung

a) wenigstens eines Amins und

b) wenigstens einer organischen Phosphonsäure,
umfasst, wobei das molare Verhältnis von b) zu a) im Bereich von 0,0005 bis 0,1, vorzugsweise 0,01 bis 0,1, insbesondere 0,02 bis 0,09 liegt.
In bestimmten Ausführungsformen umfasst die wässrige Lösung außerdem

c) wenigstens eine Carbonsäure,

wobei das molare Verhältnis von c) zu a) im Bereich von 0,0005 bis 0,1, vorzugsweise 0,01 bis 0,1, insbesondere 0,02 bis 0,09 liegt.

Das erfindungsgemäße Absorptionsmittel enthält wenigstens eine organische Phosphonsäure.

Geeignet sind beispielsweise Phosphonsäuren der Formel I

$R\text{-}PO_3H$ (I)

worin R für $C_1$-$C_{18}$-Alkyl steht, das gegebenenfalls durch bis zu vier Substituenten substituiert ist, die unabhängig ausgewählt sind unter Carboxy, Carboxamido, Hydroxy und Amino.

Hierzu zählen Alkylphosphonsäuren, wie Methylphosphonsäure, Propylphosphonsäure, 2-Methyl-propylphosphonsäure, t-Butylphosphonsäure, n-Butylphosphonsäure, 2,3-Dimethylbutylphosphonsäure, Oktylphosphonsäure; Hydroxyalkylphosphonsäuren, wie Hydroxymethylphosphonsäure, 1-Hydroxyethylphosphonsäure, 2-Hydroxyethylphosphonsäure; Arylphosphonsäuren wie Phenylphosphonsäure, Toluylphosphonsäure, Xylylphosphonsäure, Aminoalkylphosphonsäuren wie Aminomethylphosphonsäure, 1-Aminoethylphosphonsäure, 1-Dimethylaminoethylphosphonsäure, 2-Aminoethylphosphonsäure, 2-(N-Methylamino)ethylphosphonsäure, 3-Aminopropylphosphonsäure, 2-Aminopropylphosphonsäure, 1-Aminopropylphosphonsäure, 1-Aminopropyl-2-chlorpropylphosphonsäure, 2-Aminobutylphosphonsäure, 3-Aminobutylphosphonsäure, 1-Aminobutylphosphonsäure, 4-Aminobutylphosphonsäure, 2-Aminopentylphosphonsäure, 5-Aminopentylphosphonsäure, 2-Aminohexylphosphonsäure, 5-Aminohexyl phosphonsäure, 2-Aminooctylphosphonsäure, 1-Aminooctylphosphonsäure, 1-Aminobutylphosphonsäure; Amidoalkylphosphonsäuren wie 3-Hydroxymethylamino-3-oxopropylphosphonsäure; und Phosphonocarbonsäuren wie 2-Hydroxyphosphonoessigsäure und 2-Phosphonobutan-1,2,4-tricarbonsäure.

Phosphonsäuren der Formel II

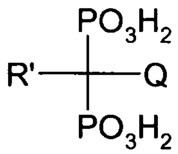

(II)

worin R' für H oder $C_{1\text{-}6}$-Alkyl steht, Q für H, OH oder $NY_2$ steht und Y für H oder $CH_2PO_3H_2$ steht, wie 1-Hydroxyethan-1,1-diphosphonsäure;

Phosphonsäuren der Formel III

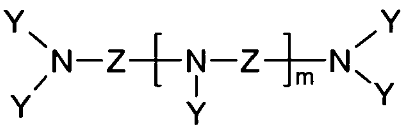

(III)

worin Z für $C_{2\text{-}6}$-Alkylen, Cycloalkandiyl, Phenylen, oder $C_{2\text{-}6}$-Alkylen, das durch Cycloalkandiyl oder Phenylen unterbrochen ist, steht, Y für $CH_2PO_3H_2$ steht und m für 0 bis 4 steht, wie Ethylendiamin-tetra(methylenphosphonsäure), Diethylentriamin-penta(methylenphosphonsäure) und Bis(hexamethylen)triamin-penta(methylen-phosphonsäure);

Phosphonsäuren der Formel IV

$R''\text{-}NY_2$ (IV)

worin R" für $C_{1\text{-}6}$-Alkyl, $C_{2\text{-}6}$-Hydroxyalkyl oder Y steht und Y für $CH_2PO_3H_2$ steht, wie Nitrilo-tris(methylenphosphonsäure) und 2-Hydroxyethyliminobis(methylenphosphonsäure).

Unter den Phosphonsäuren sind 2-Hydroxyphosphonoessigsäure, 2-Phosphonobutan-1,2,4-tricarbonsäure, 1-Hydroxyethan-1,1-diphosphonsäure, Ethylendiamin-tetra-(methylenphosphonsäure), Diethylentriamin-penta(methylenphosphonsäure), Bis(hexamethylen)triamin-penta(methylenphosphonsäure) und Nitrilo-tris(methylenphosphonsäure), wovon 1-Hydroxyethan-1,1-diphosphonsäure besonders bevorzugt ist.

Selbstverständlich können auch Gemische zweier oder mehrerer der vorstehend genannten Phosphonsäuren verwendet werden.

Die Phosphonsäure wird vorzugsweise in Form der freien Säure zu der Lösung des Amins gegeben.

Alternativ kann die Phosphonsäure in Form eines nicht-quatemären Ammoniumsalzes eingesetzt werden, d.

h. als Ammoniumsalz ($NH_4^+$-Salz) oder Salz eines primären, sekundären oder tertiären Ammoniumions. Unter den Bedingungen der Regeneration des Absorptionsmittels kann aus dem nicht-quaternären Ammoniumsalz die freie Säure freigesetzt werden. Geeignete Ammoniumsalze sind die protonierten Spezies der Amine, die als Komponente a) des Absorptionsmittels verwendet werden.

In bestimmten Ausführungsformen enthält das erfindungsgemäße Absorptionsmittel außerdem wenigstens eine Carbonsäure. Im Allgemeinen weisen geeignete Carbonsäuren 1 bis 12 Kohlenstoffatome auf.

Zu den geeigneten Carbonsäuren zählen
aliphatische Monocarbonsäuren, wie Methansäure (Ameisensäure), Ethansäure (Essigsäure), Propansäure (Propionsäure), Buttersäure;
aromatische Monocarbonsäuren, wie Benzoesäure, Phenylethansäure, Salicylsäure;
aliphatische Di- und Oligocarbonsäuren, wie Ethandisäure (Oxalsäure), Propandisäure (Malonsäure), Butandisäure, Pentandisäure;
aromatische Di- und Oligocarbonsäuren, wie 1,2-, 1,3-, 1,4-Benzoldicarbonsäure;
Aminocarbonsäuren, wie Glycin, N,N-Dimethylglycin, Alanin, N-Methylalanin;
Hydroxycarbonsäuren, wie Glykolsäure, Milchsäure, Äpfelsäure, Weinsäure, Citronensäure.

Das erfindungsgemäße Absorptionsmittel ist vorzugsweise im Wesentlichen frei von Metallsalzen.

Das erfindungsgemäße Absorptionsmittel enthält wenigstens ein Amin. Das Amin verfügt nicht über saure Gruppen, wie insbesondere Phosphonsäure-, Sulfonsäure - und/oder Carbonsäuregruppen. Zu den geeigneten Aminen zählen insbesondere:

1. Alkanolamine (Aminoalkohole) wie
2-Aminoethanol (Monoethanolamin, MEA), N,N-Bis(2-hydroxyethyl)amin (Diethanolamin, DEA), N,N-Bis(2-hydroxypropyl)amin (Diisopropanolamin, DIPA), Tris(2-hydroxyethyl)amin (Triethanolamin, TEA), Tributanolamin, Bis(2-hydroxyethyl)-methylamin (Methyldiethanolamin, MDEA), 2-Diethylaminoethanol (Diethylethanolamin, DEEA), 2-Dimethylaminoethanol (Dimethylethanolamin, DMEA), 3-Dimethylamino-1-propanol (N,N-Dimethylpropanolamin), 3-Diethylamino-1-propanol, 2-Diisopropylaminoethanol (DIEA), N,N-Bis(2-hydroxypropyl)methylamin (Methyldiisopropanolamin, MDIPA), 2-Amino-2-methyl-1-propanol (AMP), 1-Amino-2-methyl-propan-2-ol, 2-Amino-1-butanol (2-AB);
2. Aminoether wie
2-(2-Aminoethoxy)ethanol (AEE), 2-(2-tert-Butylaminoethoxy)ethanol (EETB), 3-Methoxypropyldimethylamin;
3. 5-, 6- oder 7-gliedrigen gesättigten Heterocyclen mit wenigstens einer NH-Gruppe im Ring, die ein oder zwei weitere, unter Stickstoff und Sauerstoff ausgewählte Heteroatome im Ring enthalten können,
wie Piperazin, 2-Methylpiperazin, N-Methylpiperazin, N-Ethylpiperazin, N-Aminoethylpiperazin, N-Hydroxyethylpiperazin, Homopiperazin, Piperidin und Morpholin;
4. Polyamine, z. B.

4.1 Alkylendiamine der Formel

$$H_2N\text{-}R^2\text{-}NH_2,$$

worin $R^2$ für $C_2$-$C_6$-Alkylen steht,
wie Hexamethylendiamin, 1,4-Diaminobutan, 1,3-Diaminopropan, 2,2-Dimethyl-1,3-diaminopropan,

4.2 Alkylendiamine der Formel

$$R^1\text{-}NH\text{-}R^2\text{-}NH_2$$

worin $R^1$ für $C_1$-$C_6$-Alkyl oder $C_1$-$C_6$-Hydroxyalkyl steht und $R^2$ für $C_2$-$C_6$-Alkylen steht,
wie 3-Methylaminopropylamin, N-(2-Hydroxyethyl)ethylendiamin,

4.3 Alkylendiamine der Formel

$$(R^1)_2N\text{-}R^2\text{-}NH_2$$

worin $R^1$ für $C_1$-$C_6$-Alkyl oder $C_1$-$C_6$-Hydroxyalkyl steht und $R^2$ für $C_2$-$C_6$-Alkylen steht,
wie 3-(Dimethylamino)propylamin (DMAPA) und 3-(Diethylamino)propylamin,

4.4 Alkylendiamine der Formel

$R^1$-NH-$R^2$-NH-$R^1$

worin $R^1$ für $C_1$-$C_6$-Alkyl oder $C_1$-$C_6$-Hydroxyalkyl steht und $R^2$ für $C_2$-$C_6$-Alkylen steht, wie N,N'-Bis(2-hydroxyethyl)ethylendiamin,

4.5 Bistertiäre Diamine wie
N,N,N',N'-Tetramethylethylendiamin, N,N-Diethyl-N',N'-dimethylethylendiamin, N,N,N',N'-Tetraethylethylendiamin, N,N,N',N'-Tetramethyl-1,3-propandiamin (TMPDA), N,N,N',N'-Tetraethyl-1,3-propandiamin (TEPDA), N,N-Dimethyl-N',N'-diethylethylen-diamin (DMDEEDA), 1-Dimethylamino-2-dimethylaminoethoxyethan (Bis [2-(dimethyl-amino)ethyl]ether);

4.6 Polyalkylenpolyamine
wie Diethylentriamin, Triethylentetramin und Tetraethylenpentamin, Tris(3-amino-propyl)amin, Tris(2-aminoethyl)amin;
und Gemische davon.

Alkanolamine, d. h. Amine mit wenigstens einer an das Stickstoffatom gebundenen Hydroxyalkylgruppe, sind im Allgemeinen bevorzugt.
In einer Ausführungsform umfasst das Absorptionsmittel ausschließlich Amine mit ausschließlich tertiären und/oder sterisch gehinderten Aminogruppen. Das Absorptionsmittel dieser Ausführungsform eignet sich besonders zur selektiven Entfernung von $H_2S$.
Unter "sterisch gehinderten Aminogruppen" werden vorliegend verstanden

(i) eine primäre Aminogruppe, die an ein tertiäres Kohlenstoffatom gebunden ist,

(ii) eine Aminogruppe, die an ein sekundäres oder tertiäres Kohlenstoffatom gebunden ist, und

(iii) eine Aminogruppe, wobei ein tertiäres oder quartäres Kohlenstoffatom in β-Position zur Aminogruppe angeordnet ist.

Bevorzugte Amine mit ausschließlich tertiären Aminogruppen sind Tris(2-hydroxyethyl)amin (Triethanolamin, TEA), Tris(2-hydroxypropyl)amin (Triisopropanol), Tributanolamin, Bis(2-hydroxyethyl)-methylamin (Methyldiethanolamin, MDEA), 2-Diethylaminoethanol (Diethylethanolamin, DEEA), 2-Dimethylaminoethanol (Dimethylethanolamin, DMEA), 3-Dimethylamino-1-propanol, 3-Diethylamino-1-propanol, 2-Diisopropylaminoethanol (DIEA), N,N-Bis(2-hydroxypropyl)methylamin (Methyldiisopropanolamin, MDIPA).
Bevorzugte Amine mit ausschließlich sterisch gehinderten Aminogruppen sind 2-Amino-2-methyl-1-propanol (AMP) und 1-Amino-2-methylpropan-2-ol.
In einer anderen Ausführungsform umfasst das Absorptionsmittel wenigstens ein Amin mit ausschließlich tertiären und/oder sterisch gehinderten Aminogruppen und wenigstens einen Aktivator. Der Aktivator ist üblicherweise ein primäres oder sekundäres Amin und beschleunigt die Kohlendioxid-Aufnahme durch intermediäre Bildung einer Carbamatstruktur. Das Absorptionsmittel dieser Ausführungsform eignet sich besonders zur energiesparenden, unselektiven Entfernung von Sauergasen. Im Fall der totalen Absorption wird mindestens eine der beiden Komponenten $H_2S$ oder $CO_2$ spezifiziert, wobei die andere entsprechend ihres Gleichgewichts am Absorberkopf abgereichert wird. Es kann auch vorkommen, dass für ein der beiden Sauergaskomponenten eine maximale Austrittsspezifikation festgesetzt wird.
Beispiele bevorzugter Amine mit ausschließlich tertiären und/oder sterisch gehinderten Aminogruppen sind die vorstehend genannten.
Beispiele bevorzugter Aktivatoren sind Piperazin, 2-Methylpiperazin, N-Methylpiperazin, N-Hydroxyethylpiperazin, Homopiperazin, Piperidin, Morpholin, 3-Methylaminopropylamin und 2-(2-Aminoethoxy)ethanol.
In einer anderen Ausführungsform umfasst das Absorptionsmittel wenigstens ein (nicht sterisch gehindertes) primäres und/oder sekundäres Amin. Das Absorptionsmittel dieser Ausführungsform eignet sich besonders zur energiesparenden, unselektiven Entfernung von Sauergasen bei niedrigen Sauergaspartialdrücken.
Beispiele bevorzugter primärer und/oder sekundärer Amine sind 2-Aminoethanol (Monoethanolamin, MEA), N,N-Bis(2-hydroxyethyl)amin (Diethanolamin, DEA), N,N-Bis(2-hydroxypropyl)amin (Diisopropanolamin, DIPA).
Im Allgemeinen enthält die wässrige Lösung 2 bis 5 kmol / $m^3$, insbesondere 3,5 bis 4,5 kmol / $m^3$ Amin.
Das Absorptionsmittel kann auch Additive, wie Korrosionsinhibitoren, Enzyme etc. enthalten. Im Allgemeinen liegt die Menge an derartigen Additiven im Bereich von etwa 0,01-3 Gew.-% des Absorptionsmittels.
Die Erfindung betrifft außerdem ein Verfahren zum Entfernen saurer Gase aus einem Fluidstrom, bei dem man

den Fluidstrom mit dem oben definierten Absorptionsmittel in Kontakt bringt.

In der Regel regeneriert man das beladene Absorptionsmittel durch

a) Erwärmung,
b) Entspannung,
c) Strippen mit einem inerten Fluid

oder eine Kombination zweier oder aller dieser Maßnahmen.

Das erfindungsgemäße Verfahren bzw. Absorptionsmittel ist geeignet zur Behandlung von Fluiden, insbesondere Gasströmen aller Art. Bei den sauren Gasen handelt es sich insbesondere um $CO_2$, $H_2S$, aber auch COS und Mercaptane. Außerdem können auch $SO_3$, $SO_2$, $CS_2$ und HCN entfernt werden. Fluide, welche die sauren Gase enthalten, sind einerseits Gase, wie Erdgas, Synthesegas, Koksofengas, Spaltgas, Kohlevergasungsgas, Kreisgas, Deponiegase und Verbrennungsgase, und andererseits mit dem Absorptionsmittel im Wesentlichen nicht mischbare Flüssigkeiten, wie LPG (Liquefied Petroleum Gas) oder NGL (Natural Gas Liquids). Das erfindungsgemäße Verfahren bzw. Absorptionsmittel ist besonders zur Behandlung von kohlenwasserstoffhaltigen Fluidströmen geeignet. Die enthaltenen Kohlenwasserstoffe sind z. B. aliphatische Kohlenwasserstoffe, wie $C_1$-$C_4$-Kohlenwasserstoffe, wie Methan, ungesättigte Kohlenwasserstoffe, wie Ethylen oder Propylen, oder aromatische Kohlenwasserstoffe wie Benzol, Toluol oder Xylol. Das erfindungsgemäße Verfahren bzw. Absorptionsmittel ist besonders zur Entfernung von $CO_2$ und $H_2S$ geeignet.

In bevorzugten Ausführungsformen ist der der Fluidstrom ein

(i) Wasserstoff enthaltender Fluidstrom oder ein Wasserstoff und Kohlendioxid enthaltender Fluidstrom; hierzu zählen Synthesegase, die z. B. durch Kohlevergasung oder Steamreforming herstellbar sind und gegebenenfalls einer Wassergas-Shift-Reaktion unterzogen sind; die Synthesegase werden z. B. zur Herstellung von Ammoniak, Methanol, Formaldehyd, Essigsäure, Harnstoff, zur Fischer-Tropsch-Synthese oder zur Energiegewinnung in einem Integrated Gasification Combined Cycle (IGCC) Prozess verwendet

(ii) Kohlenwasserstoffe enthaltender Fluidstrom; hiezu zählen neben Erdgas Abgase verschiedener Raffinerieprozesse, wie der Tailgas Unit (TGU), eines Visbreakers (VDU), eines katalytischen Crackers (LRCUU/FCC), eines Hydrocrackers (HCU), eines Hydrotreaters (HDS/HTU), eines Cokers (DCU), einer Atmosphärischen Destillation (CDU) oder eines Liquid Treaters (z. B. LPG).

Das erfindungsgemäße Verfahren eignet sich zur selektiven Entfernung von Schwefelwasserstoff gegenüber $CO_2$. Unter "selektiver Entfernung von Schwefelwasserstoff" wird verstanden, dass die folgende Ungleichung erfüllt ist

$$\frac{\dfrac{c(H_2S)_{feed} - c(H_2S)_{treat}}{c(H_2S)_{feed}}}{\dfrac{c(CO_2)_{feed} - c(CO_2)_{treat}}{c(CO_2)_{feed}}} > 1$$

worin $c(H_2S)_{feed}$ die Konzentration von $H_2S$ im Ausgangsfluid, $c(H_2S)_{treat}$ die Konzentration im behandelten Fluid, $c(CO_2)_{feed}$ die Konzentration von $CO_2$ im Ausgangsfluid und $c(CO_2)_{treat}$ die Konzentration von $CO_2$ im behandelten Fluid bedeuten.

Die selektive Entfernung von $H_2S$ s ist z. B. von Vorteil a) zur Einhaltung einer vorgegeben $H_2S$ Spezifikationen, wenn die maximale Sauergas-Gesamtbeladbarkeit des Absorptionsmittels bereits erreicht ist und b) zur Einstellung eines höheren $H_2S/CO_2$-Verhältnisses im Sauergasstrom, der bei der Regeneration des Absorptionsmittels freigesetzt wird und der typischerweise in eine Claus-Anlage gefahren wird. Ein Sauergasstrom mit höherem $H_2S/CO_2$-Verhältnis weist einen höheren Brennwert auf und unterdrückt die Bildung von COS (aus $CO_2$), welches die Laufzeit des Claus-Katalysators beeinträchtigt.

Im erfindungsgemäßen Verfahren wird das an sauren Gasbestandteilen reiche Ausgangsfluid (Rohgas) in einem Absorptionsschritt in einem Absorber in Kontakt mit dem Absorptionsmittel gebracht, wodurch die sauren Gasbestandteile zumindest teilweise ausgewaschen werden.

Als Absorber fungiert vorzugsweise eine in üblichen Gaswäscheverfahren eingesetzte Waschvorrichtung. Geeignete Waschvorrichtungen sind beispielsweise Füllkörper, Packungs- und Bodenkolonnen, Membrankontaktoren, Radialstromwäscher, Strahlwäscher, Venturi-Wäscher und Rotations-Sprühwäscher, bevorzugt Packungs-, Füllkörper-

und Bodenkolonnen, besonders bevorzugt Boden- und Füllkörperkolonnen. Die Behandlung des Fluidstroms mit dem Absorptionsmittel erfolgt dabei bevorzugt in einer Kolonne im Gegenstrom. Das Fluid wird dabei im Allgemeinen in den unteren Bereich und das Absorptionsmittel in den oberen Bereich der Kolonne eingespeist. In Bodenkolonnen sind Sieb-, Glocken- oder Ventilböden eingebaut, über welche die Flüssigkeit strömt. Füllkörperkolonnen können mit unterschiedlichen Formkörpern gefüllt werden. Wärme- und Stoffaustausch werden durch die Vergrößerung der Oberfläche aufgrund der meist etwa 25 bis 80 mm großen Formkörper verbessert. Bekannte Beispiele sind der Raschig-Ring (ein Hohlzylinder), Pall-Ring, Hiflow-Ring, Intalox-Sattel und dergleichen. Die Füllkörper können geordnet, aber auch regellos (als Schüttung) in die Kolonne eingebracht werden. Als Materialien kommen in Frage Glas, Keramik, Metall und Kunststoffe. Strukturierte Packungen sind eine Weiterentwicklung der geordneten Füllkörper. Sie weisen eine regelmäßig geformte Struktur auf. Dadurch ist es bei Packungen möglich, Druckverluste bei der Gasströmung zu reduzieren. Es gibt verschiedene Ausführungen von Packungen z. B. Gewebe- oder Blechpackungen. Als Material können Metall, Kunststoff, Glas und Keramik eingesetzt werden.

Die Temperatur des Absorptionsmittels beträgt im Absorptionsschritt im Allgemeinen etwa 30 bis 100 °C, bei Verwendung einer Kolonne beispielsweise 30 bis 70 °C am Kopf der Kolonne und 50 bis 100 °C am Boden der Kolonne. Der Gesamtdruck beträgt im Absorptionsschritt im Allgemeinen etwa 1 bis 120 bar, bevorzugt etwa 10 bis 100 bar.

Es wird ein an sauren Gasbestandteilen armes, d. h. ein an diesen Bestandteilen abgereichertes Produktgas (Reingas) und ein mit sauren Gasbestandteilen beladenes Absorptionsmittel erhalten. Das erfindungsgemäße Verfahren kann einen oder mehrere, insbesondere zwei, aufeinander folgende Absorptionsschritte umfassen. Die Absorption kann in mehreren aufeinander folgenden Teilschritten durchgeführt werden, wobei das die sauren Gasbestandteile enthaltende Rohgas in jedem der Teilschritte mit jeweils einem Teilstrom des Absorptionsmittels in Kontakt gebracht wird. Das Absorptionsmittel, mit dem das Rohgas in Kontakt gebracht wird, kann bereits teilweise mit sauren Gasen beladen sein, d. h. es kann sich beispielsweise um ein Absorptionsmittel, das aus einem nachfolgenden Absorptionsschritt in den ersten Absorptionsschritt zurückgeführt wurde, oder um teilregeneriertes Absorptionsmittel handeln. Bezüglich der Durchführung der zweistufigen Absorption wird Bezug genommen auf die Druckschriften EP-A 0 159 495, EP-A 0 190 434, EP-A 0 359 991 und WO 00100271.

Gemäß einer bevorzugten Ausführungsform wird das erfindungsgemäße Verfahren so durchgeführt, dass das die sauren Gase enthaltende Fluid zunächst in einem ersten Absorptionsschritt mit dem Absorptionsmittel bei einer Temperatur von 40 bis100 °C, bevorzugt 50 bis 90 °C und insbesondere 60 bis 90 °C behandelt wird. Das an sauren Gasen abgereicherte Fluid wird dann in einem zweiten Absorptionsschritt mit dem Absorptionsmittel bei einer Temperatur von 30 bis 90 °C, bevorzugt 40 bis 80 °C und insbesondere 50 bis 80 °C, behandelt. Dabei ist die Temperatur um 5 bis 20 °C niedriger als in der ersten Absorptionsstufe.

Aus dem mit den sauren Gasbestandteilen beladenen Absorptionsmittel können die sauren Gasbestandteile in üblicher Weise (analog zu den nachfolgend zitierten Publikationen) in einem Regenerationsschritt freigesetzt werden, wobei ein regeneriertes Absorptionsmittel erhalten wird. Im Regenerationsschritt wird die Beladung des Absorptionsmittels verringert und das erhaltene regenerierte Absorptionsmittel wird vorzugsweise anschließend in den Absorptionsschritt zurückgeführt.

Im Allgemeinen beinhaltet der Regenerationsschritt mindestens eine Druckentspannung des beladenen Absorptionsmittels von einem hohen Druck, wie er bei der Durchführung des Absorptionsschritts herrscht, auf einen niedrigeren Druck. Die Druckentspannung kann beispielsweise mittels eines Drosselventils und/oder einer Entspannungsturbine geschehen. Die Regeneration mit einer Entspannungsstufe ist beispielsweise beschrieben in den Druckschriften US 4,537, 753 und US 4,553, 984.

Die Freisetzung der sauren Gasbestandteile im Regenerationsschritt kann beispielsweise in einer Entspannungskolonne, z. B. einem senkrecht oder waagerecht eingebauten Flash-Behälter oder einer Gegenstromkolonne mit Einbauten, erfolgen.

Bei der Regenerationskolonne kann es sich ebenfalls um eine Füllkörper-, Packungs - oder Bodenkolonne handeln. Die Regenerationskolonne weist am Sumpf einen Aufheizer auf, z. B. einen Zwangsumlaufverdampfer mit Umwälzpumpe. Am Kopf weist die Regenerationskolonne einen Auslass für die freigesetzten Sauergase auf. Mitgeführte Absorptionsmitteldämpfe werden in einem Kondensator kondensiert und in die Kolonne zurückgeführt.

Es können mehrere Entspannungskolonnen hintereinander geschaltet werden, in denen bei unterschiedlichen Drücken regeneriert wird. Beispielsweise kann in einer Vorentspannungskolonne bei hohem Druck, der typischerweise etwa 1,5 bar oberhalb des Partialdrucks der sauren Gasbestandteile im Absorptionsschritt liegt, und in einer Hauptentspannungskolonne bei niedrigem Druck, beispielsweise 1 bis 2 bar absolut, regeneriert werden. Die Regeneration mit zwei oder mehr Entspannungsstufen ist beschrieben in den Druckschriften US 4,537, 753, US 4,553, 984, EP-A 0 159 495, EP-A 0 202 600, EP-A 0 190 434 und EP-A 0 121 109.

Eine Verfahrensvariante mit zwei Niederdruckentspannungsstufen (1 bis 2 bar absolut), bei der die in der ersten Niederdruckentspannungsstufe teilregenerierte Absorptionsflüssigkeit erwärmt wird, und bei der gegebenenfalls vor der ersten Niederdruckentspannungsstufe eine Mitteldruckentspannungsstufe vorgesehen wird, bei der auf mindestens 3 bar entspannt wird, ist in DE 100 28 637 beschrieben. Dabei wird die beladene Absorptionsflüssigkeit zunächst in einer

ersten Niederdruckentspannungsstufe auf einen Druck von 1 bis 2 bar (absolut) entspannt. Anschließend wird die teilregenerierte Absorptionsflüssigkeit in einem Wärmetauscher erwärmt und dann in einer zweiten Niederdruckentspannungsstufe erneut auf einen Druck von 1 bis 2 bar (absolut) entspannt.

Die letzte Entspannungsstufe kann auch unter Vakuum durchgeführt werden, das beispielsweise mittels eines Wasserdampfstrahlers, gegebenenfalls in Kombination mit einem mechanischen Vakuumerzeugungsapparat, erzeugt wird, wie beschrieben in EP-A 0 159 495, EP-A 0 202 600, EP-A 0 190 434 und EP-A 0 121 109 (US 4,551,158).

Wegen der optimalen Abstimmung des Gehalts an den Aminkomponenten weist das erfindungsgemäße Absorptionsmittel eine hohe Beladbarkeit mit sauren Gasen auf, die auch leicht wieder desorbiert werden können. Dadurch können bei dem erfindungsgemäßen Verfahren der Energieverbrauch und der Lösungsmittelumlauf signifikant reduziert werden.

Die Erfindung wird anhand der beigefügten Zeichnung und des nachfolgenden Beispiels näher veranschaulicht.

Fig. 1 ist eine schematische Darstellung einer zur Durchführung des erfindungsgemäßen Verfahrens geeigneten Anlage.

Gemäß Fig. 1 wird über eine Zuleitung 1 ein geeignet vorbehandeltes, sauergase enthaltendes Gas in einem Absorber 2 mit dem regenerierten Absorptionsmittel, das über die Absorptionsmittelleitung 3 zugeführt wird, im Gegenstrom in Kontakt gebracht. Das Absorptionsmittel entfernt Sauergase durch Absorption aus dem Gas; dabei wird über eine Abgasleitung 4 ein an Sauergasen armes Reingas gewonnen.

Über eine Absorptionsmittelleitung 5, eine Pumpe 12, einen Solvent-Solvent-Wärmetauscher 11, in dem das mit Sauergas beladene Absorptionsmittel mit der Wärme des aus dem Sumpf der Desorptionskolonne 7 austretenden, regenerierten Absorptionsmittels aufgeheizt wird, und ein Drosselventil 6 wird das mit Sauergas beladene Absorptionsmittel einer Desorptionskolonne 7 zugeleitet. Im unteren Teil der Desorptionskolonne 7 wird das beladene Absorptionsmittel mittels eines (nicht dargestellten) Aufheizers erwärmt und regeneriert. Das dabei freigesetzte Sauergas verlässt die Desorptionskolonne 7 über die Abgasleitung 8. Das regenerierte Absorptionsmittel wird anschließend mittels einer Pumpe 9 über den Solvent-Solvent-Wärmetauscher 11, in dem das regenerierte Absorptionsmittel das mit Sauergas beladenen Absorptionsmittel aufheizt und selbst dabei abkühlt, und einen Wärmetauscher 10 der Absorptionskolonne 2 wieder zugeführt.

Vergleichsbeispiel 1 und Beispiel 2

Man stellte eine 39 Gew.-%ige (32,8 mol-%) Lösung von Methyldiethanolamin her. Aliquote von 200 ml wurden mit 1 Gew.-% Ortho-Phosphorsäure ($H_3PO_4$) bzw. 1,2 Gew.-% 1-Hydroxyethan-1,1-diphosphonsäure (HEDP) versetzt.

Die beiden Lösungen wurden bei 50 °C bei Normaldruck bis zum Gleichgewicht mit $H_2S$ beladen. Die $H_2S$-Gleichgewichtsbeladung wurde durch potentiometrische Titration gegen Silbernitrat bestimmt.

Anschließend wurden die Lösungen zur Simulation des Regenerationsvorgangs in einem Erlenmeyerkolben mit aufgesetztem Rückflusskühler in einem Ölbad bei konstant 100 °C aufgekocht. Dabei wurde jeweils 10 Nl/h Stickstoffgas durch die Flüssigkeit geperlt, um den Austausch zwischen Gas- und Flüssigphase zu verbessern und das freigesetzte $H_2S$ über den Kühler zu entfernen.

Nach bestimmten Zeitintervallen wurden jeweils Proben von 20 ml entnommen und der $H_2S$-Gehalt erneut durch potentiometrische Titration gegen Silbernitrat bestimmt. Die Ergebnisse sind in der nachstehenden Tabelle zusammengefasst.

| Beispiel | 1 | 2 |
|---|---|---|
| Promotor | $H_3PO_4$ | HEDP |
| $H_2S$-Gleichgewichtsbeladung bei 50 °C $(Nm^3]_{H2s}/t$ | 46,9 | 46,8 |
| $H_2S$-Beladung bezogen auf Ausgangswert [%] nach | | |
| 0 min | 100,0 | 100,0 |
| 15 min | 40,5 | 18,7 |
| 45 min | 14,2 | 6,7 |
| 105 min | 3,9 | 1,6 |
| 225 min | 1,3 | 0 |
| 405 min | 0,4 | 0 |

Aus den Versuchsergebnissen ist ersichtlich, dass eine Regeneration auf eine vorgegebene Restbeladung (z.

B. weniger als 2 %) im Beispiel 2 (mit HEDP) schneller erzielt wird als im Vergleichsbeispiel 1. Da in der gewählten Versuchsanordnung der Energieeintrag dem Produkt des konstanten Wärmestroms und der Zeit proportional ist, ist die erforderliche Regenerationsenergie im Beispiel 2 deutlich geringer.

Vergleichsbeispiele 3 und 5 und Beispiele 4 und 6

Man stellte eine wässrige Lösung von 37 Gew.-% MDEA + 3Gew.-% Piperazin (Gesamtaminkonzentration 40 Gew.-%; 33,3 mol-%) her (so genanntes aktiviertes MDEA). Ein Aliquot von 200 ml wurde mit 1,2 Gew.-% (0,6 mol-%) 1-Hydroxyethan-1,1-diphosphonsäure (HEDP) versetzt. Ein weiteres Aliquot diente als Kontrolle.

Es wurden zwei Versuchsreihen durchgeführt. Bei der ersten Reihe wurden die Lösungen bei 50 °C bei Normaldruck bis zum Gleichgewicht mit $CO_2$ beladen, bei der zweiten Versuchsreihe bei 70 °C. Die $CO_2$-Gleichgewichtsbeladung wurde durch Titration mit KOH bestimmt.

Anschließend wurden die Lösungen zur Simulation des Regenerationsvorgangs in einem Erlenmeyerkolben mit aufgesetztem Rückflusskühler in einem Ölbad bei konstant 100 °C aufgekocht. Dabei wurde jeweils 10 Nl/h Stickstoffgas durch die Flüssigkeit geperlt, um den Austausch zwischen Gas- und Flüssigphase zu verbessern und das freigesetzte $CO_2$ über den Kühler zu entfernen.

Nach bestimmten Zeitintervallen wurden jeweils Proben von 20 ml entnommen und der $CO_2$-Gehalt erneut durch Titration mit KOH bestimmt. Die Ergebnisse sind in der nachstehenden Tabelle zusammengefasst.

| Beispiel | 3 (50 °C) | 4 (50 °C) | 5 (70 °C) | 6 (70 °C) |
|---|---|---|---|---|
| Promotor | - | HEDP | - | HEDP |
| $CO_2$-Gleichgewichtsbeladung $[Nm^3]_{CO2}/t$ | 43,5 | 43,0 | 26,4 | 25,6 |
| $CO_2$-Beladung bezogen auf Ausgangswert [%] nach | | | | |
| 0 min | 100,0 | 100,0 | 100,0 | 100,0 |
| 15 min | 12,7 | 11,2 | 29,9 | 22,3 |
| 45 min | 4,4 | 4,9 | 7,3 | 3,6 |
| 105 min | 1,8 | 0,7 | 2,6 | 0,7 |
| 225 min | 0,9 | 0,4 | 1,2 | 0,5 |
| 405 min | 0,9 | 0,7 | 0,8 | 0,6 |

Aus den Versuchsergebnissen ist ersichtlich, dass eine Regeneration auf eine vorgegebene Restbeladung (z. B. weniger als 2 %) in den Beispielen 4 und 6 (mit HEDP) schneller erzielt wird als in den Vergleichsbeispielen 3 und 5. Da in der gewählten Versuchsanordnung der Energieeintrag dem Produkt des konstanten Wärmestroms und der Zeit proportional ist, ist die erforderliche Regenerationsenergie in den Beispielen 4 und 6 deutlich geringer.

## Patentansprüche

1. Absorptionsmittel zum Entfernen saurer Gase aus einem Fluidstrom, umfassend eine wässrige Lösung

   a) wenigstens eines Amins und
   b) wenigstens einer organischen Phosphonsäure,

   wobei das molare Verhältnis von b) zu a) im Bereich von 0,0005 bis 0,1 liegt.

2. Absorptionsmittel nach Anspruch 1, wobei das molare Verhältnis von b) zu a) im Bereich von 0,01 bis 0,1 liegt.

3. Absorptionsmittel nach Anspruch 1 oder 2, wobei die Phosphonsäure ausgewählt ist unter Phosphonsäuren der Formel I

   $$R\text{-}PO_3H \qquad (I)$$

   worin R für $C_1$-$C_{18}$-Alkyl steht, das gegebenenfalls durch bis zu vier Substituenten substituiert ist, die unabhängig

ausgewählt sind unter Carboxy, Carboxamido, Hydroxy und Amino,
Phosphonsäuren der Formel II

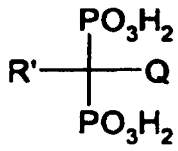

(II)

worin R' für H oder $C_{1-6}$-Alkyl steht, Q für H, OH oder $NY_2$ steht und Y für H oder $CH_2PO_3H_2$ steht,
Phosphonsäuren der Formel III

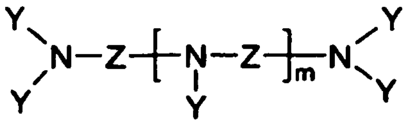

(III)

worin Z für $C_{2-6}$-Alkylen, Cycloalkandiyl, Phenylen, oder $C_{2-6}$-Alkylen, das durch Cycloalkandiyl oder Phenylen unterbrochen ist, steht, Y für $CH_2PO_3H_2$ steht und m für 0 bis 4 steht,
Phosphonsäuren der Formel IV

$R''\text{-}NY_2$ (IV)

worin R" für $C_{1-6}$-Alkyl, $C_{2-6}$-Hydroxyalkyl oder Y steht und Y für $CH_2PO_3H_2$ steht; oder Gemischen zweier oder mehrerer davon.

**4.** Absorptionsmittel nach Anspruch 3, wobei die Phosphonsäure 1-Hydroxyethan-1,1-diphosphonsäure umfasst.

**5.** Absorptionsmittel nach einem der vorhergehenden Ansprüche, wobei die wässrige Lösung außerdem umfasst

c) wenigstens eine Carbonsäure,

wobei das molare Verhältnis von c) zu a) im Bereich von 0,0005 bis 0,1 liegt.

**6.** Absorptionsmittel nach einem der vorhergehenden Ansprüche, wobei das Amin wenigstens ein Alkanolamin umfasst.

**7.** Absorptionsmittel nach einem der vorhergehenden Ansprüche, wobei das Amin ausschließlich Amine mit ausschließlich tertiären und/oder sterisch gehinderten Aminogruppen umfasst.

**8.** Absorptionsmittel nach einem der Ansprüche 1 bis 6, wobei das Amin wenigstens ein Amin mit ausschließlich tertiären und/oder sterisch gehinderten Aminogruppen und wenigstens einen Aktivator umfasst.

**9.** Absorptionsmittel nach Anspruch 7 oder 8, wobei das Amin mit ausschließlich tertiären Aminogruppen ausgewählt ist unter Tris(2-hydroxyethyl)amin, Tris(2-hydroxypropyl)amin, Tributanolamin, Bis(2-hydroxyethyl)-methylamin, 2-Diethylaminoethanol, 2-Dimethylaminoethanol, 3-Dimethylamino-1-propanol, 3-Diethyl-amino-1-propanol, 2-DÜsopropylaminoethanol und N,N-Bis(2-hydroxypropyl)-methylamin; und das Amin mit ausschließlich sterisch gehinderten Aminogruppen ausgewählt ist unter 2-Amino-2-methyl-1-propanol und 1-Amino-2-methylpropan-2-ol.

**10.** Absorptionsmittel nach Anspruch 8, wobei der Aktivator ausgewählt ist unter Piperazin, 2-Methylpiperazin, N-Methylpiperazin, Homopiperazin, Piperidin, Morpholin, 3-Methylaminopropylamin und 2-(2-Aminoethoxy)ethanol.

**11.** Absorptionsmittel nach einem der Ansprüche 1 bis 6, wobei das Amin wenigstens ein primäres und/oder sekundäres Amin umfasst.

**12.** Absorptionsmittel nach Anspruch 11, wobei das primäre und/oder sekundäre Amin ausgewählt ist unter 2-Aminoethanol, N,N-Bis(2-hydroxyethyl)amin und N,N-Bis(2-hydroxypropyl)amin.

**13.** Absorptionsmittel nach einem der vorhergehenden Ansprüche, wobei die wässrige Lösung 2 bis 5 kmol / $m^3$ Amin enthält.

**14.** Verfahren zum Entfernen saurer Gase aus einem Fluidstrom, bei dem man den Fluidstrom mit Absorptionsmittel nach einem der vorhergehenden Ansprüche in Kontakt bringt.

**15.** Verfahren nach Anspruch 14, zur selektiven Entfernung von Schwefelwasserstoff.

**16.** Verfahren nach Anspruch 14 oder 15, wobei der Fluidstrom Kohlenwasserstoffe enthält.

**17.** Verfahren nach einem der Ansprüche 14 bis 16, wobei man das beladene Absorptionsmittel durch

a) Erwärmung,
b) Entspannung,
c) Strippen mit einem inerten Fluid

oder eine Kombination zweier oder aller dieser Maßnahmen regeneriert.

## Claims

**1.** An absorption medium for the removal of acid gases from a fluid stream which comprises an aqueous solution

a) of at least one amine and
b) at least one organic phosphonic acid,

wherein the molar ratio of b) to a) is in the range from 0.0005 to 0.1.

**2.** The absorption medium according to claim 1, wherein the molar ratio of b) to a) is in the range from 0.01 to 0.1.

**3.** The absorption medium according to claim 1 or 2, wherein the phosphonic acid is selected from phosphonic acids of the formula I

$$R\text{-}PO_3H \qquad (I)$$

where R is $C_1$-$C_{18}$-alkyl, which is optionally substituted by up to four substituents which are independently selected from carboxyl, carboxamido, hydroxy and amino,
phosphonic acids of the formula II

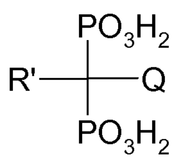
(II)

where R' is H or $C_{1-6}$-alkyl, Q is H, OH or $NY_2$ and Y is H or $CH_2PO_3H_2$, phosphonic acids of the formula III

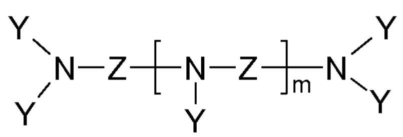
(III)

where Z is $C_{2-6}$-alkylene, cycloalkanediyl, phenylene, or $C_{2-6}$-alkylene, which is interrupted by cycloalkanediyl or phenylene, Y is $CH_2PO_3H_2$ and m is 0 to 4,
phosphonic acids of the formula IV

$R''-NY_2$ 2 (IV)

where R" is $C_{1-6}$-alkyl, $C_{2-6}$-hydroxyalkyl or Y and Y is $CH_2PO_3H_2$;
or mixtures of two or more thereof.

**4.** The absorption medium according to claim 3, wherein the phosphonic acid comprises 1-hydroxyethane-1,1-diphosphonic acid.

**5.** The absorption medium according to any one of the preceding claims, wherein the aqueous solution additionally comprises

c) at least one carboxylic acid,

wherein the molar ratio of c) to a) is in the range from 0.0005 to 0.1.

**6.** The absorption medium according to any one of the preceding claims, wherein the amine comprises at least one alkanolamine.

**7.** The absorption medium according to any one of the preceding claims, wherein the amine comprises solely amines having solely tertiary and/or sterically hindered amino groups.

**8.** The absorption medium according to any one of claims 1 to 6, wherein the amine comprises at least one amine having solely tertiary and/or sterically hindered amino groups and at least one activator.

**9.** The absorption medium according to claim 7 or 8, wherein the amine having solely tertiary amino groups is selected from tris(2-hydroxyethyl)amine, tris(2-hydroxypropyl)amine, tributanolamine, bis(2-hydroxyethyl)methylamine, 2-diethylaminoethanol, 2-dimethylaminoethanol, 3-dimethylamino-1-propanol, 3-diethylamino-1-propanol, 2-diisopropylaminoethanol and N,N-bis(2-hydroxypropyl)methylamine; and the amine having solely sterically hindered amino groups is selected from 2-amino-2-methyl-1-propanol and 1-amino-2-methylpropan-2-ol.

**10.** The absorption medium according to claim 8, wherein the activator is selected from piperazine, 2-methylpiperazine, N-methylpiperazine, homopiperazine, piperidine, morpholine, 3-methylaminopropylamine and 2-(2-aminoethoxy) ethanol.

**11.** The absorption medium according to any one of claims 1 to 6, wherein the amine comprises at least one primary amine and/or secondary amine.

**12.** The absorption medium according to claim 11, wherein the primary amine and/or secondary amine is selected from 2-aminoethanol, N,N-bis(2-hydroxyethyl)amine and N,N-bis(2-hydroxypropyl)amine.

**13.** The absorption medium according to any one of the preceding claims, wherein the aqueous solution comprises 2 to 5 $kmol/m^3$ of amine.

**14.** A process for the removal of acid gases from a fluid stream in which process the fluid stream is brought into contact with an absorption medium according to any one of the preceding claims.

**15.** The process according to claim 14 for the selective removal of hydrogen sulfide.

**16.** The process according to claim 14 or 15, wherein the fluid stream comprises hydrocarbons.

**17.** The process according to any one of claims 14 to 16, wherein the loaded absorption medium is regenerated by

a) heating,
b) expansion,
c) stripping with an inert fluid

or a combination of two or all of these measures.

## Revendications

1. Agent d'absorption pour l'élimination de gaz acides d'un courant fluide, comprenant une solution aqueuse

   a) d'au moins une amine et
   b) d'au moins un acide phosphonique organique,

   le rapport molaire de b) sur a) se situant dans la plage allant de 0,0005 à 0,1.

2. Agent d'absorption selon la revendication 1, dans lequel le rapport molaire de b) sur a) se situe dans la plage allant de 0,01 à 0,1.

3. Agent d'absorption selon la revendication 1 ou 2, dans lequel l'acide phosphonique est choisi parmi les acides phosphoniques de formule I

   $R-PO_3H$ (I)

   dans laquelle R représente alkyle en $C_1$-$C_{18}$, qui est éventuellement substitué par jusqu'à quatre substituants, qui sont choisis indépendamment parmi carboxy, carboxamido, hydroxy et amino,
   les acides phosphoniques de formule II

   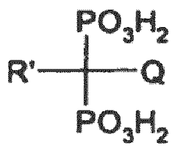 (II)

   dans laquelle R' représente H ou alkyle en $C_{1-6}$, Q représente H, OH ou $NY_2$, et Y représente H ou $CH_2PO_3H_2$,
   les acides phosphoniques de formule III

   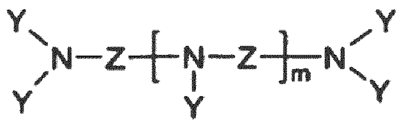 (III)

   dans laquelle Z représente alkylène en $C_{2-6}$, cycloalcanediyle, phénylène ou alkylène en $C_{2-6}$, qui est interrompu par cycloalcanediyle ou phénylène, Y représente $CH_2PO_3H_2$ et m représente 0 à 4,
   les acides phosphoniques de formule IV

   $R''-NY_2$ (IV)

   dans laquelle R" représente alkyle en $C_{1-6}$, hydroxyalkyle en $C_{2-6}$ ou Y, et Y représente $CH_2PO_3H_2$ ;
   ou les mélanges de deux ou plus d'entre eux.

4. Agent d'absorption selon la revendication 3, dans lequel l'acide phosphonique comprend l'acide 1-hydroxyéthane-1,1-diphosphonique.

5. Agent d'absorption selon l'une quelconque des revendications précédentes, dans lequel la solution aqueuse comprend également

   c) au moins un acide carboxylique,

   le rapport molaire de c) sur a) se situant dans la plage allant de 0,0005 à 0,1.

6. Agent d'absorption selon l'une quelconque des revendications précédentes, dans lequel l'amine comprend au moins une alcanolamine.

**7.** Agent d'absorption selon l'une quelconque des revendications précédentes, dans lequel l'amine comprend exclusivement des amines contenant des groupes amino tertiaires et/ou à encombrement stérique.

**8.** Agent d'absorption selon l'une quelconque des revendications 1 à 6, dans lequel l'amine comprend au moins une amine contenant exclusivement des groupes amino tertiaires et/ou à encombrement stérique et au moins un activateur.

**9.** Agent d'absorption selon la revendication 7 ou 8, dans lequel l'amine contenant exclusivement des groupes amino tertiaires est choisie parmi la tris(2-hydroxyéthyl)amine, la tris(2-hydroxypropyl)amine, la tributanolamine, la bis(2-hydroxyéthyl)méthylamine, le 2-diéthylaminoéthanol, le 2-diméthylaminoéthanol, le 3-diméthylamino-1-propanol, le 3-diéthylamino-1-propanol, le 2-diisopropylaminoéthanol et la N,N-bis(2-hydroxypropyl)méthylamine ; et l'amine contenant exclusivement des groupes amino à encombrement stérique est choisie parmi le 2-amino-2-méthyl-1-propanol et le 1-amino-2-méthylpropan-2-ol.

**10.** Agent d'absorption selon la revendication 8, dans lequel l'activateur est choisi parmi la pipérazine, la 2-méthylpipérazine, la N-méthylpipérazine, l'homopipérazine, la pipéridine, la morpholine, la 3-méthylaminopropylamine et le 2-(2-aminoéthoxy)éthanol.

**11.** Agent d'absorption selon l'une quelconque des revendications 1 à 6, dans lequel l'amine comprend au moins une amine primaire et/ou secondaire.

**12.** Agent d'absorption selon la revendication 11, dans lequel l'amine primaire et/ou secondaire est choisie parmi le 2-aminoéthanol, la N,N-bis(2-hydroxyéthyl)amine et la N,N-bis(2-hydroxypropyl)amine.

**13.** Agent d'absorption selon l'une quelconque des revendications précédentes, dans lequel la solution aqueuse contient 2 à 5 kmol/$m^3$ d'amine.

**14.** Procédé d'élimination de gaz acides d'un courant fluide, selon lequel le courant fluide est mis en contact avec l'agent d'absorption selon l'une quelconque des revendications précédentes.

**15.** Procédé selon la revendication 14, pour l'élimination sélective de sulfure d'hydrogène.

**16.** Procédé selon la revendication 14 ou 15, dans lequel le courant fluide contient des hydrocarbures.

**17.** Procédé selon l'une quelconque des revendications 14 à 16, dans lequel l'agent d'absorption chargé est régénéré par

a) chauffage,
b) détente,
c) extraction avec un fluide inerte

ou une combinaison de deux ou de l'ensemble de ces mesures.

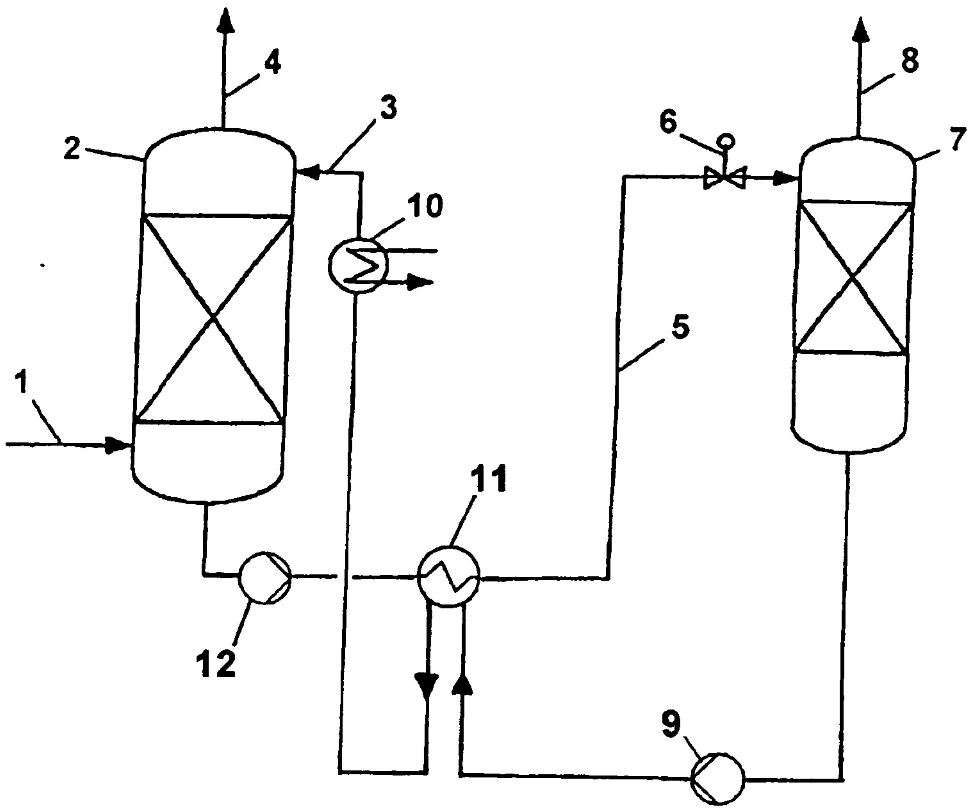


Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4336233 A
- EP 134948 A
- WO 2007021531 A
- EP 0159495 A
- EP 0190434 A
- EP 0359991 A
- WO 00100271 A
- US 4537753 A
- US 4553984 A
- EP 0202600 A
- EP 0121109 A
- DE 10028637
- US 4551158 A